# EUROPÄISCHE PATENTANMELDUNG

(11) **EP 4 696 208 A1**
(43) Veröffentlichungstag der Anmeldung: **18.02.2026**
(21) Anmeldenummer: 25189558.7
(22) Anmeldetag: 15.07.2025
(51) Int. Cl.: A47L 9/02, A47L 9/30

(54) **BODENEINHEIT FÜR EIN BODENREINIGUNGSGERÄT UND BODENREINIGUNGSGERÄT**

(30) Priorität: 16.08.2024 DE 102024123396; 19.08.2024 BE 202400042
(71) Anmelder: Miele & Cie. KG, 33332 Gütersloh (DE)
(72) Erfinder: Geser, Willi, 33617 Bielefeld (DE); Hansen, Alexander, 33106 Paderborn (DE); Nickel, Stanislaw, 33335 Gütersloh (DE); Kim, Vaekgon, 90480 Nürnberg (DE)

(57) **Zusammenfassung**

Die Erfindung betrifft eine Bodeneinheit für ein Bodenreinigungsgerät mit einer Hauptbewegungsrichtung, wobei die Bodeneinheit eine vordere Kante und mindestens eine weitere Kante aufweist, wobei die weitere Kante in einem Winkel zur vorderen Kante angeordnet ist, wobei die Bodeneinheit eine Lichtquelle und einen Lichtleiter aufweist, wobei die Lichtquelle dazu ausgebildet ist Licht auszusenden, wobei der Lichtleiter dazu ausgebildet ist von der Lichtquelle ausgesendetes Licht zu empfangen, wobei der Lichtleiter einen Lichtauskoppelbereich aufweist, wobei der Lichtauskoppelbereich dazu ausgebildet ist, von der Lichtquelle empfangendes Licht auf einen zu reinigenden Boden auszusenden, wobei der Lichtauskoppelbereich des Lichtleiters entlang der vorderen Kante und der weiteren Kante angeordnet ist.

## Beschreibung

Die Erfindung betrifft eine Bodeneinheit für ein Bodenreinigungsgerät mit einer Hauptbewegungsrichtung, wobei die Bodeneinheit eine vordere Kante und mindestens eine weitere Kante aufweist, wobei die weitere Kante in einem Winkel zur vorderen Kante angeordnet ist, wobei die Bodeneinheit eine Lichtquelle und einen Lichtleiter aufweist, wobei die Lichtquelle dazu ausgebildet ist, Licht auszusenden, wobei der Lichtleiter dazu ausgebildet, ist von der Lichtquelle ausgesendetes Licht zu empfangen, wobei der Lichtleiter einen Lichtauskoppelbereich aufweist, wobei der Lichtauskoppelbereich dazu ausgebildet ist, von der Lichtquelle empfangendes Licht auf einen zu reinigenden Boden auszusenden. Zudem betrifft die Erfindung ein Bodenreinigungsgerät mit einer solchen Bodeneinheit.

Aus der EP 3 760 092 A1 und EP 3 760 093 A1 sind Bodendüsen für Staubsauger bekannt, welche einen Lichtleiter mit einem Lichtauskoppelbereich an der Vorderkante der Bodendüse aufweisen. Diese Lichtleiter ermöglichen lediglich eine Ausleuchtung eines Bodenbereiches unmittelbar vor einer Bodendüse. Hingegen werden die Bereiche, welche sich seitlich oder hinter der Bodendüse im Reinigungsbetrieb befinden, von diesen Bodendüsen nicht ausgeleuchtet. In der Folge sind verschmutzte Bodenbereiche für den Benutzer eines solchen Staubsaugers nicht optimal erkennbar. Zudem ist ein mit der Bodendüse erzielter Reinigungserfolg nicht optimal sichtbar, da der bereits gereinigte Bodenbereich hinter der Bodendüse nicht beleuchtet ist.

Der Erfindung stellt sich somit das Problem eine verbesserte Bodeneinheit zur Verfügung zu stellen. Zudem stellt sich der Erfindung das Problem ein verbessertes handgeführtes Bodenreinigungsgerät mit einer solchen Bodeneinheit zur Verfügung zu stellen.

Erfindungsgemäß wird dieses Problem durch ein Bodeneinheit mit den Merkmalen des Patentanspruchs 1 und durch ein handgeführtes Bodenreinigungsgerät mit den Merkmalen gemäß Anspruch 15 gelöst. Vorteilhafte Ausgestaltungen und Weiterbildungen der Erfindung ergeben sich aus den nachfolgenden Unteransprüchen.

Erfindungsgemäß ist der Lichtauskoppelbereich des Lichtleiters entlang der vorderen Kante und der weiteren Kante angeordnet. In einer bevorzugten Ausführungsform ist der Lichtleiter dabei entlang der gesamten vorderen Kante und/oder weiteren Kante angeordnet. Hierbei ist der Lichtleiter durchgängig entlang der vorderen und/oder der weiteren Kante angeordnet. Hierdurch wird der die Bodeneinheit umgebende Bodenbereich verbessert durch die Bodeneinheit ausgeleuchtet. Dies erleichtert die Reinigung des Bodenbereichs durch die Bodeneinheit und macht erzielte Reinigungserfolge besser sichtbar.

Bei einem handgeführten Bodenreinigungsgerät kann es sich um ein handgeführtes Gerät zur Feucht- und/oder Trockenreinigung von Bodenflächen handeln. Bei solchen Bodenreinigungsgeräten kann es sich beispielsweise um einen Staubsauger, ein Saugwischgerät oder ein Wischgerät handeln. Bei einer Bodeneinheit für ein solches handgeführtes Bodenreinigungsgerät kann es sich dementsprechend um eine Staubsaugerdüse, eine Saugwischdüse oder um einen Wischaufsatz handeln.

Bei der Hauptbewegungsrichtung der Bodeneinheit handelt es sich um die Richtung, in welche die Bodeneinheit infolge eines Vorwärtshubes durch den Benutzer der Bodeneinheit im Reinigungsbetrieb geschoben wird. Die vordere Kante der Bodeneinheit ist die Kante, mit welcher die Bodeneinheit im Reinigungsbetrieb bei einem Vorwärtshub der Bodeneinheit in die Hauptbewegungsrichtung eine Bodenfläche zuerst überfährt. Bei einer weiteren Kante kann es sich beispielsweise um eine seitliche oder hintere Kante der Bodeneinheit handeln. Die hintere Kante der Bodeneinheit ist die Kante, mit welcher die Bodeneinheit im Reinigungsbetrieb beim einem Vorwärtshub der Bodeneinheit eine Bodenfläche zuletzt überfährt. Bei der seitlichen Kante der Bodeneinheit handelt es sich um die Kante der Bodeneinheit, welche die vordere und hintere Kante der Bodeneinheit miteinander verbindet. Bei einer weiteren Kante kann es sich aber auch um eine zweite vordere Kante oder um eine Kante mit einem runden Verlauf handeln. Eine Kante mit einem runden Verlauf kann eine Mischform aus einer vorderen, seitlichen oder hinteren Kante darstellen.

Bei dem Winkel zwischen der vorderen Kante und der weiteren Kante kann es sich beispielweise um einen rechtwinkligen Winkel handeln. Beim Winkel zwischen der vorderen Kante und der weiteren Kante handelt es sich um den innenliegenden Winkel zwischen diesen beiden Kanten. In alternativen Ausführungsformen kann der Winkel zwischen der vorderen Kante und der weiteren Kante zwischen 30 und 160 Grad betragen.

Bei einer Lichtquelle kann es sich vorzugsweise um eine Leuchtdiode (LED) handeln. Die Lichtquelle kann vorzugsweise auf einer Leiterkarte in der Bodeneinheit angeordnet sein. Bei einer Leiterkarte kann es sich um eine elektronische Platine handeln. Die Leiterkarte der Bodeneinheit kann ebenfalls dazu ausgebildet sein, weitere Komponenten der Bodeneinheit zu steuern und/oder mit elektrischer Energie zu versorgen. Die Leiterkarte kann ein Kontaktelement zur Verbindung mit einem elektrischen Leiter aufweisen. Zudem kann die Leiterkarte ein Bauteil zum Einstellen einer Lichtquellen-Versorgungsspannung und ein Kühlmittel zum Kühlen der Lichtquelle aufweisen. Der Lichtleiter kann mit einer Lichteinkoppelstelle an der Leiterkarte befestigt sein.

Der Lichtleiter kann einen Durchmesser von 2 bis 5 Millimetern aufweisen. Der Lichtleiter kann mittels eines Spritzgussverfahrens aus einem Kunststoff, insbesondere aus einem PMMA, hergestellt sein. Der Lichtleiter weist eine Lichteinkoppelstelle auf, mit welcher der Lichtleiter von der Lichtquelle ausgesendetes Licht empfangen kann. Anschließend an die Lichteinkoppelstelle kann der Lichtleiter einen Lichttransportbereich aufweisen mittels dem das an der Lichteinkoppelstelle aufgenommenen Licht in Richtung des Lichttransportbereiches des Lichtleiters weitergeleitet wird. Anschließend an den Lichttransportbereich weist der Lichtleiter einen Lichtauskoppelbereich auf, in welchem das aufgenommene Licht in Richtung einer zu Bodenfläche emittiert wird.

Bevorzugt ist der Lichtauskoppelbereich des Lichtleiters an einer vorderen Kante und einer seitlichen Kante angeordnet. Hierdurch werden auch Bereiche einer zu reinigenden Bodenfläche beleuchtet, welche sich im Reinigungsbetrieb seitlich neben der Bodeneinheit befinden.

Weiterhin bevorzugt ist der Lichtauskoppelbereich des Lichtleiters an einer vorderen Kante und einer hinteren Kante angeordnet. Hierdurch werden auch Bereiche einer zu reinigenden Bodenfläche beleuchtet, welche sich im Reinigungsbetrieb hinter der Bodeneinheit befinden.

In einer bevorzugten Ausführungsform ist der Lichtauskoppelbereich des Lichtleiters umlaufend an allen Kanten der Bodeneinheit angeordnet. In einer besonders bevorzugten Ausführungsform ist der Lichtleiter dabei durchgängig an allen Kanten der Bodeneinheit angeordnet. Hierdurch werden alle Bereiche einer zu reinigenden Bodenfläche beleuchtet, welche sich im Reinigungsbetrieb um die Bodeneinheit herum befinden.

Zudem ist es bevorzugt, dass der Lichtleiter einen Lichttransportbereich zum Transport des von der Lichtquelle ausgesendeten Lichts zum Lichtauskoppelbereich aufweist, wobei der Lichttransportbereich des Lichtleiters einen runden Querschnitt aufweist. Ein Lichtleiter mit einem runden Querschnitt eignet sich im besonderen Maße für einen möglichst verlustfreien Transport von aufgenommenem Licht im Lichtleiter.

Darüber hinaus ist es bevorzugt, dass der Lichtleiter im Lichtauskoppelbereich einen prismatischen Querschnitt aufweist. Ein Lichtauskoppelbereich mit einem prismatischen Querschnitt gewährleistet eine möglichst effiziente Auskopplung des durch den Lichtleiter aufgenommenen Lichts.

Es ist zudem bevorzugt, dass der Lichtleiter im Lichtauskoppelbereich prismatische Ausnehmungen aufweist, wobei die prismatischen Ausnehmungen jeweils eine Höhe aufweisen, die ausgehend vom Lichttransportbereich zu einem Mittel- oder Endpunkt des Lichtauskoppelbereichs zunimmt. Bei einem Endpunkt eines Lichtauskoppelbereiches handelt es sich um den Punkt eines Lichtleiters, welcher am weitesten von der Lichteinkoppelstelle entfernt ist. Bei einem Mittelpunkt eines Lichtauskoppelbereiches handelt es sich um den Punkt eines Lichtleiters mit zwei Lichteinkoppelstellen, welcher gleich weit von beiden Lichteinkoppelstellen entfernt ist. Prismatische Ausnehmungen mit zunehmender Höhe gewährleisten eine möglichst homogene Auskopplung des vom Lichtleiter aufgenommenen Lichts entlang seiner kompletten Länge.

Dabei ist es bevorzugt, dass der Lichttransportbereich des Lichtleiters einen Radius bildet, wobei der Radius zwischen 9 bis 35 Millimetern beträgt. In einer besonders bevorzugten Ausführungsform bildet der Lichtleiter im Lichttransportbereich einen Radius von 25 Millimetern. Ein Lichtleiter mit einem solchen Radius begrenzt einerseits die Verluste an Lichtleistung im Lichttransportbereich und nutzt andererseits optimal den in der Bodeneinheit hierfür zur Verfügung stehenden Bauraum.

In einer bevorzugten Ausführungsform ist am Lichtleiter im Lichtauskoppelbereich ein Reflektor angeordnet, wobei der Reflektor den Lichtleiter halbkreisförmig umschließt. Der Reflektor ist dazu ausgebildet, vom Lichtleiter emittiertes Licht in Richtung eines Untergrunds zu reflektieren. Der Reflektor ist hierbei entlang des gesamten Verlaufes des Lichtauskoppelbereichs des Lichtleiters angeordnet. Der Reflektor verstärkt und homogenisiert das vom Lichtleiter auf den Untergrund emittierte Licht.

Zudem ist es bevorzugt, dass der Reflektor in einem Abstand zum Lichtleiter angeordnet ist, wobei der Abstand kleiner als 1 Millimeter ist. Hierdurch wird der für den Lichtleiter in der Bodeneinheit erforderliche Bauraum reduziert.

Weiterhin ist es bevorzugt, dass der Reflektor eine Wandstärke zwischen 0,8 und 1,5 Millimetern aufweist. Eine möglichst geringe Wandstärke des Reflektors gewährleistet eine gute Biegsamkeit des Reflektors, welcher sich in der Folge einfach montieren lässt. In einer besonders bevorzugten Ausführungsform können der Lichtleiter und der Reflektor als vormontierte Montageeinheit ausgeführt sein. Hierdurch lässt sich der Lichtleiter mitsamt Reflektor zeiteffizient und einfach in der Bodeneinheit montieren.

Bevorzugt ist, dass am Lichtleiter im Lichtauskoppelbereich eine Linse angeordnet ist, wobei die Linse dazu ausgebildet das vom Lichtleiter emittierte Licht in Richtung einer Bodenfläche zu lenken. Zusätzlich kann die Linse dazu ausgebildet sein den Lichtleiter vor Beschädigungen im Reinigungsbetrieb der Bodeneinheit zu schützen

Dabei ist es bevorzugt, dass die Linse in einem Winkel zu einer Senkrechten angeordnet ist, welche an einer Kante der Bodeneinheit anliegt, wobei der Winkel der Linse zwischen 5 und 35 Grad liegt. In einer besonders bevorzugten Ausführungsform beträgt dieser Winkel 20 Grad. Ein solcher Winkel gewährleistet zum einen eine gute Ausleuchtung des zu reinigenden Bodenbereichs durch den Lichtleiter und ermöglicht andererseits eine möglichst effiziente Ausnutzung des in der Bodeneinheit zur Verfügung stehenden Bauraums.

In einer bevorzugten Ausführungsform ist die Linse aus einem transparenten, amorphen Thermoplast, insbesondere aus MABS oder PC, ausgebildet. Eine Linse aus einem solchem Material erfüllt optimal die technischen Anforderungen und lässt sich zudem mittels eines Spritzgussverfahrens herstellen.

Ein Ausführungsbeispiel der Erfindung ist in den Zeichnungen rein schematisch dargestellt und wird nachfolgend näher beschrieben. Es zeigen:
- Figur 1: Seitenansicht eines Staubsaugers,
- Figur 2: perspektivische Ansicht einer Bodeneinheit mit umlaufenden Lichtleiter,
- Figur 3: perspektivische Ansicht einer Bodeneinheit mit umlaufenden Lichtleiter,
- Figur 4: Schnittansicht einer Bodeneinheit mit umlaufenden Lichtleiter,
- Figur 5: Ansicht einer Montageeinheit aus einer Leiterkarte mit Lichtleiter,
- Figur 6: perspektivische Ansicht einer weiteren Bodeneinheit mit umlaufenden Lichtleiter,
- Figur 7: perspektivische Ansicht einer weiteren Bodeneinheit mit umlaufenden Lichtleiter,
- Figur 8: Ansicht eines Lichtleiters mit prismatischen Ausnehmungen.

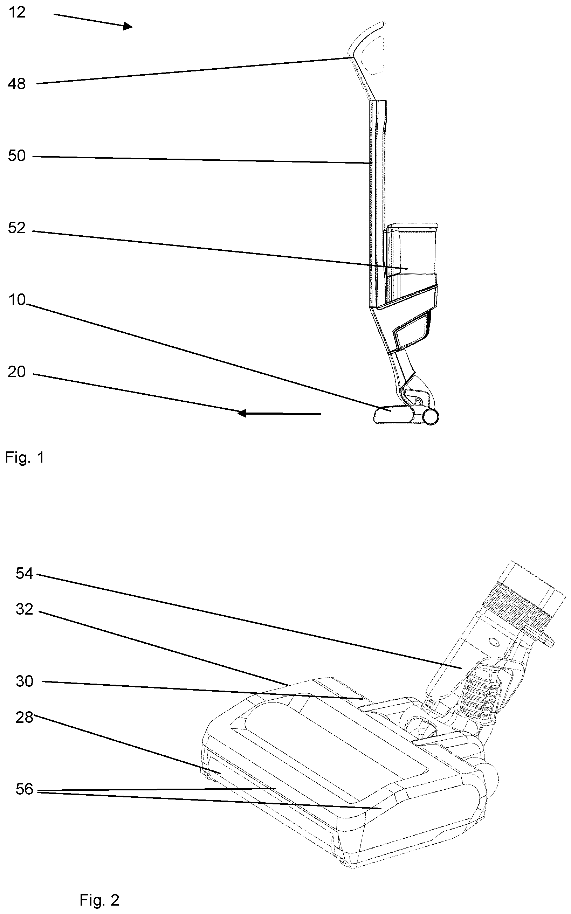

Figur 1 zeigt eine Seitenansicht eines Bodenreinigungsgerätes 12 mit einer Bodeneinheit 10. Beim Bodenreinigungsgerät 12 in Figur 1 handelt es sich um einen Staubsauger 12 mit einem Griff 48, einem Saugrohr 50, einem Korpus 52 und einer Bodendüse 10. Im Reinigungsbetrieb eines solchen Staubsaugers 12 ist dessen Bodendüse 10 auf einer zu reinigenden Bodenfläche angeordnet. Die Bodendüse 10 wird dabei vom Benutzer des Staubsaugers 12 mittels des Griffs 48 über die zu reinigende Bodenfläche bewegt. Der in Figur 1 dargestellte Pfeil stellt dabei die Hauptbewegungsrichtung 20 der Bodendüse 10 im Reinigungsbetrieb dar.

Figur 2 zeigt eine perspektivische Ansicht einer Bodeneinheit 10 für ein Bodenreinigungsgerät 12 mit einem umlaufenden Lichtleiter 46 (nicht dargestellt in Figur 2). Bei der in Figur 2 dargestellten Bodeneinheit 10 handelt es sich um eine Bodendüse 10 für einen Staubsauger 12. Die Bodendüse 10 weist eine vordere Kante 28, eine hintere Kante 30 und zwei seitlichen Kanten 32 auf. An der hinteren Kante 30 der Bodendüse ist ein Gelenk 54 angeordnet, welches mit einem Saugrohr 50 verbindbar ist. Bei dem Gelenk 54 handelt es sich um ein Dreh-Kipp-Gelenk mit welchem im Reinigungsbetrieb Lenkimpulse vom Saugrohr 50 auf die Bodendüse 10 übertragen werden können. Hierdurch kann ein Benutzer im Reinigungsbetrieb die Bodendüse 10 steuern.

Die Bodendüse 10 weist ein Gehäuseunterteil 40 auf, in welchem alle Komponenten der Bodendüse 10 , wie das Bodenreinigungselement 36, der Antrieb 38, die Leiterkarte 14 und der Lichtleiter 46 (nicht in Figur 2 dargestellt) angeordnet sind. Auf dem Gehäuseunterteil 40 ist das Gehäuseoberteil 42 angeordnet. Beide Gehäuseteile 40, 42 sind miteinander verschraubt. An der oberen Kante des Gehäuseoberteils 42 ist umlaufend ein transluzenter Gehäuseabschnitt 56 vorgesehen, welche dazu ausgebildet ist, das vom Lichtleiter 46 emittierte Licht in Richtung des Untergrunds zu lenken.

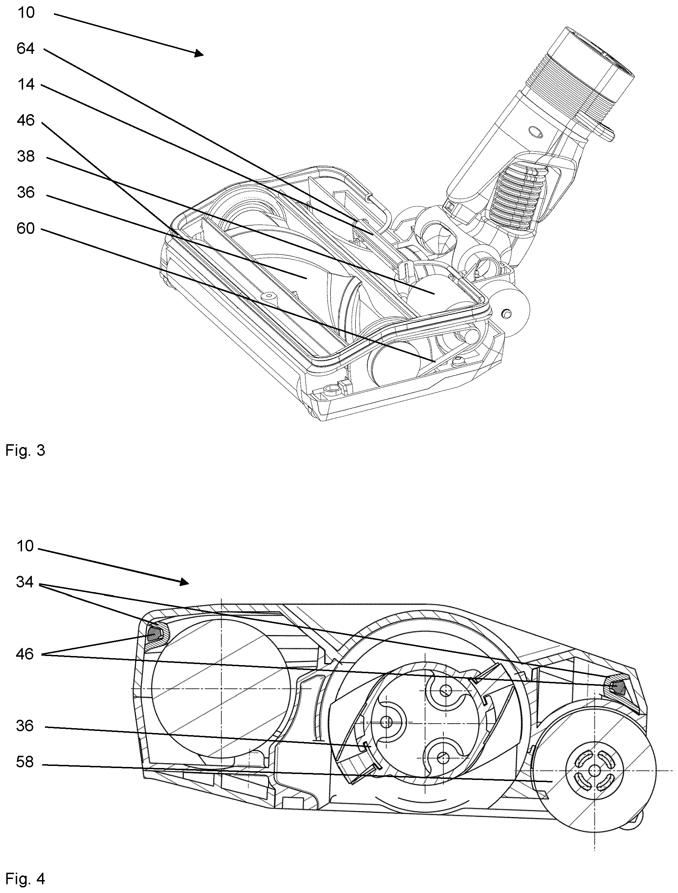

Figur 3 zeigt eine perspektivische Ansicht einer Bodeneinheit 10 mit umlaufenden Lichtleiter 46 ohne montiertes Gehäuseoberteil 42. Im Gehäuseunterteil 40 der Bodendüse 10 ist ein Bodenreinigungselement 36 zur Reinigung einer Bodenfläche angeordnet. Zudem ist in der Bodendüse 10 ein Antrieb 38 in Form eines elektrischen Motors 58 und eines Riemens 60 angeordnet. Der Riemen 60 verbindet den elektrischen Motor 58 mit dem Bodenreinigungselement 36. Im Reinigungsbetrieb der Bodendüse 10 wird das Bodenreinigungselement 36 über den Riemen 60 durch den Motor 58 angetrieben. Über das Bodenreinigungselement 36 werden im Reinigungsbetrieb Staub- und Schmutzpartikel von einer zu reinigenden Bodenfläche mobilisiert und mittels des Saugluftstroms der Bodendüse 10 eingesaugt.

An der hinteren Kante 30 der Bodendüse 10 ist eine Leiterkarte 14 im Gehäuseunterteil 40 angeordnet. Die Leiterkarte 14 ist mittig zentriert in Bezug auf die Längsachse der Bodendüse 10 im Gehäuseunterteil 40 aufgenommen. Die Leiterkarte 14 weist eine rechteckige Form auf und wird durch eine Halterung 64 des Gehäuseunterteils 40 fixiert. Die Vorderseite 16 der Leiterkarte 14 ist in Richtung der Hauptbewegungsrichtung 20 der Bodendüse 10 ausgerichtet. Auf der Rückseite 18 der Leiterkarte 14 sind zwei Lichtquellen 22 (nicht dargestellt in Figur 2) angeordnet. An den beiden Lichtquellen 22 ist ein Lichtleiter 46 mit jeweils einer Lichteinkoppelstelle 24 mit der Leiterkarte 14 verbunden. Der Lichtleiter 46 weist zwei Lichteinkoppelstellen 24, zwei daran anschließende Lichttransportbereichen 62 und einem Lichtauskoppelbereich 26 auf. Die beiden Lichttransportbereiche 62 des Lichtleiters 46 sind auf eine erste Biegung des Lichtleiters 46 beschränkt, welcher ausgehend von der Leiterkarte 14 den Lichtleiter 46 am Gelenk 54 vorbeiführt. Die restliche Länge des Lichtleiters 46 wird durch den Lichtauskoppelbereich 26 gebildet.

Der Lichtauskoppelbereich 26 des Lichtleiters 46 ist umlaufend am oberen Rand des Gehäuseunterteils 40 angeordnet. Der Lichtleiter 46 verläuft dabei entlang der hinteren Kante 30 der Bodendüse 10, sowie an den beiden seitlichen Kanten 32 als auch an der vorderen Kante 28 und bildet somit einen geschlossenen Kreis. Der Lichtleiter 46 wird im Lichtauskoppelbereich 26 von einem Reflektor 34 gekapselt, welcher den Lichtleiter 46 beinahe vollständig umschließt. Der Reflektor 34 ist lediglich in eine Richtung geöffnet. Der Lichtleiter 46 wird mitsamt dem Reflektor 34 im Lichtauskoppelbereich mit dem Gehäuseunterteil 46 in einer dafür vorgesehenen Sicke eingeklipst.

Figur 4 zeigt eine Schnittansicht durch eine Bodendüse 10 mit einem umlaufenden Lichtleiter 46. An einer vorderen Kante 28 der Bodendüse 10 wird der Lichtleiter 46 dabei durch einen Reflektor 34 gekapselt und ist mitsamt dem Reflektor 34 im Gehäuseunterteil 40 fixiert. Der Reflektor 34 umschließt den Lichtleiter 46 beinahe vollständig und ist nur in eine Richtung geöffnet. In diesem Bereich wird der Lichtleiter 46 durch den transluzenten Abschnitt 56 des Gehäuseoberteils 42 abgedeckt. Der Lichtleiter 46 an der vorderen Kante 28 der Bodendüse 10 ist oberhalb der Bodenreinigungselementes 36 und des Antriebs 38 angeordnet.

An der hinteren Kante 30 der Bodendüse 10 wird der Lichtleiter 46 ebenfalls durch den Reflektor 34 gekapselt. Der Reflektor 34 umschließt den Lichtleiter 46 dabei beinahe vollständig und ist nur entgegen der Hauptbewegungsrichtung 20 der Bodendüse 10 geöffnet. In diesem Bereich wird der Lichtleiter 46 durch den transluzenten Abschnitt 56 des Gehäuseoberteils 42 abgedeckt. Der Lichtleiter 46 an der hinteren Kante 30 der Bodendüse 10 ist weitestgehend oberhalb des Bodenreinigungselementes 36 und des Antriebs 38 angeordnet.

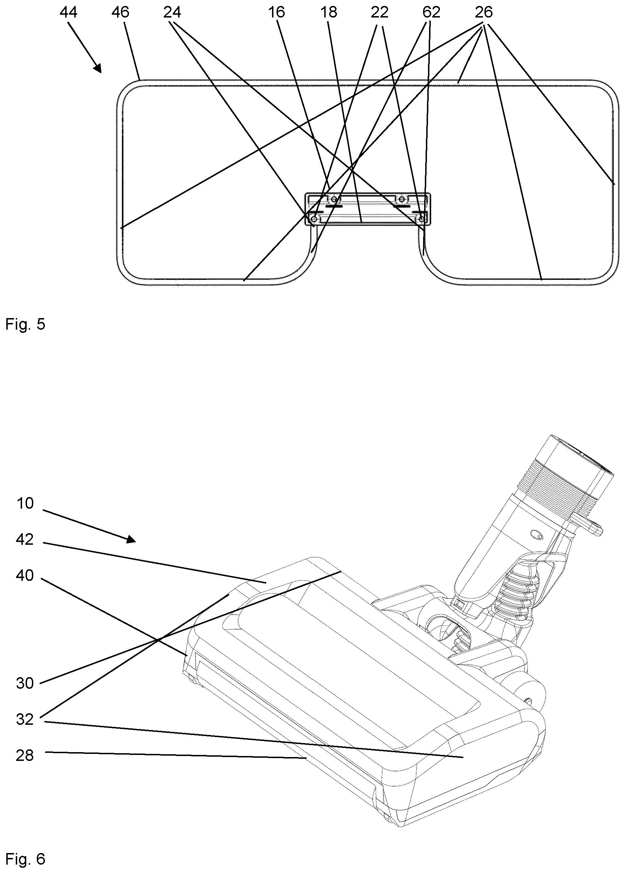

Figur 5 zeigt eine isolierte Ansicht einer Leiterkarte 14 mit verbundenen Lichtleiter 46. Die Leiterkarte 14 weist eine rechteckige Form auf, an dessen beiden äußeren Enden 66 jeweils eine LED angeordnet ist, welche als Lichtquelle 22 fungiert. An der Leiterkarte 14 sind an den beiden LEDs ein Lichtleiter 46 mit zwei Lichteinkoppelstellen 24 befestigt. An die Lichteinkoppelstellen 24 schließt sich für die erste Biegung ein Lichttransportbereich 62 an, bevor der Lichtleiter 46 für den restlichen Verlauf in einen Lichtauskoppelbereich 26 übergeht. Der Lichtleiter 46 weist dabei eine annähernd rechteckige Grundform auf, welche sich an der Grundform der Bodeneinheit 10 orientiert. Der Verlauf des Lichtleiters 46 im Lichtauskoppelbereich 26 ist dabei lediglich in den Übergangsbereichen zwischen der vorderen 28, der hinteren 30 und den seitlichen Kanten 32 abgerundet.

Figur 6 zeigt eine perspektivische Ansicht einer weiteren Ausführungsform einer Bodeneinheit 10 mit einem umlaufenden Lichtleiter 46. Auch bei der Bodeneinheit 10 gemäß Figur 6 handelt es sich um eine Bodendüse 10 für einen Staubsauger 12. Im Unterschied zur Bodendüse 10 gemäß Figur 3 weist die Bodendüse 10 in Figur 6 eine noch flachere Bauform, insbesondere an der hinteren Kante 30, auf. Hierdurch werden die Unterfahreigenschaften der Bodendüse 10 weiter verbessert.

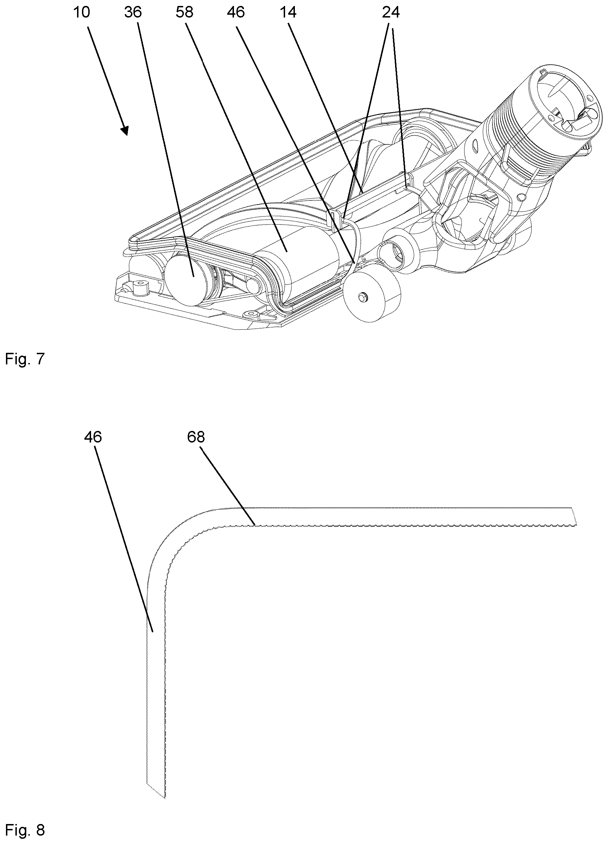

Figur 7 zeigt eine perspektivische Ansicht der Bodendüse 10 in der Ausführungsform gemäß Figur 6 ohne montiertes Gehäuseoberteil 42. Der Lichtleiter 46 wird in dieser Ausführungsform ausgehend von der Leiterkarte 14 im Lichttransportbereich 62 durch eine erste Biegung am Gelenk 54 vorbei und nach unten geführt. Hierdurch verläuft der Lichtleiter 46 im Lichtauskoppelbereich 26 an der hinteren Kante 30 der Bodendüse 10 unterhalb des Antriebs 38. Im Übergang zwischen der hinteren Kante 30 und den seitlichen Kanten 32 wird der Lichtleiter 46 nach oben geführt, sodass der Lichtleiter 46 an beiden seitlichen Kanten 32 und der vorderen Kante 28 oberhalb von Antrieb 38 und Bodenreinigungselement 36 verläuft. Diese Führung des Lichtleiters 46 an der hinteren Kante 30 der Bodendüse 10 ermöglicht deren besonders flachen Aufbau.

Figur 8 zeigt einen Abschnitt eines Lichtleiters 46, welcher dazu ausgebildet ist an einer vorderen und an einer seitlichen Kante 28, 32 einer erfindungsgemäßen Bodeneinheit 10 angeordnet zu sein. Der Abschnitt des Lichtleiters 46 für die vordere Kante 28 der Bodeneinheit 10 ist über einen gebildeten Radius mit dem Abschnitt des Lichtleiters 46 für eine seitliche Kante 32 durchgängig verbunden. Auf einer Innenseite des Lichtleiters 46 sind prismatische Ausnehmungen 68 mit unterschiedlicher Höhe angeordnet, welche eine homogene Auskopplung des Lichts aus dem Lichtleiter 46 bewirken.

### Bezugszeichenliste

- 10: Bodeneinheit / Bodendüse
- 12: Bodenreinigungsgerät / Staubsauger
- 14: Leiterkarte
- 16: Vorderseite Leiterkarte
- 18: Rückseite Leiterkarte
- 20: Hauptbewegungsrichtung Bodeneinheit
- 22: Lichtquelle
- 24: Lichteinkoppelstelle
- 26: Lichtauskoppelbereich
- 28: Vordere Kante Bodeneinheit
- 30: Hintere (weitere) Kante Bodeneinheit
- 32: Seitliche (weitere) Kante Bodeneinheit
- 34: Reflektor
- 36: Bodenreinigungselement
- 38: Antrieb
- 40: Gehäuseunterteil
- 42: Gehäuseoberteil
- 44: Montageeinheit Leiterkarte
- 46: Lichtleiter
- 48: Griff
- 50: Saugrohr
- 52: Korpus
- 54: Gelenk
- 56: transluzenter Gehäuseabschnitt / Linse
- 58: Motor
- 60: Riemen
- 62: Lichttransportbereich
- 64: Halterung
- 66: Ende Leiterkarte
- 68: Prismatische Ausnehmungen

## Patentansprüche

1. Bodeneinheit (10) für ein handgeführtes Bodenreinigungsgerät (12) mit einer Hauptbewegungsrichtung (20), wobei die Bodeneinheit (10) eine vordere Kante (28) und mindestens eine weitere Kante (30, 32) aufweist, wobei die weitere Kante (30, 32) in einem Winkel zur vorderen Kante (28) angeordnet ist, wobei die Bodeneinheit (10) eine Lichtquelle (22) und einen Lichtleiter (46) aufweist, wobei die Lichtquelle (22) dazu ausgebildet ist, Licht auszusenden, wobei der Lichtleiter (46) dazu ausgebildet ist, von der Lichtquelle (22) ausgesendetes Licht zu empfangen, wobei der Lichtleiter (46) einen Lichtauskoppelbereich (26) aufweist, wobei der Lichtauskoppelbereich (26) dazu ausgebildet ist, von der Lichtquelle (22) empfangendes Licht auf einen zu reinigenden Boden auszusenden,
**dadurch gekennzeichnet,**
**dass** der Lichtauskoppelbereich (26) des Lichtleiters (46) entlang der vorderen Kante (28) und der weiteren Kante (30, 32) angeordnet ist.

2. Bodeneinheit (10) gemäß Anspruch 1, wobei der Lichtauskoppelbereich (26) des Lichtleiters (46) an einer vorderen Kante (28) und einer seitlichen Kante (32) angeordnet ist.

3. Bodeneinheit (10) gemäß Anspruch 1 oder 2, wobei der Lichtauskoppelbereich (26) des Lichtleiters (46) an einer vorderen Kante (28) und einer hinteren Kante (30) angeordnet ist.

4. Bodeneinheit (10) gemäß einer der vorhergehenden Ansprüche, wobei der Lichtauskoppelbereich (26) des Lichtleiters (46) umlaufend an allen Kanten (28, 30, 32) der Bodeneinheit (10) angeordnet ist.

5. Bodeneinheit (10) gemäß einer der vorhergehenden Ansprüche, wobei der Lichtleiter (46) einen Lichttransportbereich (62) zum Transport des von der Lichtquelle (22) ausgesendeten Lichts zum Lichtauskoppelbereich (26) aufweist, wobei der Lichttransportbereich (62) des Lichtleiters (46) einen runden Querschnitt aufweist.

6. Bodeneinheit (10) gemäß Anspruch 5, wobei der Lichtleiter (46) im Lichtauskoppelbereich (26) einen prismatischen Querschnitt aufweist.

7. Bodeneinheit (10) gemäß einer der vorhergehenden Ansprüche, wobei der Lichtleiter (46) im Lichtauskoppelbereich (26) prismatische Ausnehmungen aufweist, wobei die prismatischen Ausnehmungen jeweils eine Höhe aufweisen, die ausgehend vom Lichttransportbereich (62) zu einem Mittel- oder Endpunkt des Lichtauskoppelbereichs (26) zunimmt.

8. Bodeneinheit (10) gemäß einer der vorhergehenden Ansprüche, wobei der Lichttransportbereich (62) des Lichtleiters (46) einen Radius bildet, wobei der Radius zwischen 9 bis 35 Millimetern beträgt.

9. Bodeneinheit (10) gemäß einer der vorhergehenden Ansprüche, wobei am Lichtleiter (46) im Lichtauskoppelbereich (26) ein Reflektor (34) angeordnet ist, wobei der Reflektor (34) den Lichtleiter (46) halbkreisförmig umschließt.

10. Bodeneinheit (10) gemäß Anspruch 9, wobei der Reflektor (34) in einem Abstand zum Lichtleiter (46) angeordnet ist, wobei der Abstand kleiner als 1 Millimeter ist.

11. Bodeneinheit (10) gemäß einer der Ansprüche 9 oder 10, wobei der Reflektor (34) eine Wandstärke zwischen 0,8 und 1,5 Millimetern aufweist.

12. Bodeneinheit (10) gemäß einer der vorhergehenden Ansprüche, wobei am Lichtleiter (46) im Lichtauskoppelbereich (26) eine Linse (56) angeordnet ist, wobei die Linse (56) dazu ausgebildet ist, das vom Lichtleiter (46) emittierte Licht in Richtung einer Bodenfläche zu lenken.

13. Bodeneinheit (10) gemäß einer der vorhergehenden Ansprüche, wobei die Linse (56) in einem Winkel zu einer Senkrechten angeordnet ist, welche an einer Kante (28, 30, 32) der Bodeneinheit (10) anliegt, wobei der Winkel der Linse (56) zwischen 5 und 35 Grad liegt.

14. Bodeneinheit (10) gemäß Anspruch 12, wobei die Linse (56) aus einem transparenten, amorphen Thermoplast, insbesondere aus MABS oder PC, ausgebildet ist.

15. Handgeführtes Bodenreinigungsgerät (12) mit einer Bodeneinheit (10) gemäß Anspruch 1.
